Europäisches Patentamt

European Patent Office

Office européen des brevets

(11) Publication number: **0 404 314**
**A1**

## EUROPEAN PATENT APPLICATION

(21) Application number: 90304560.7

(22) Date of filing: 26.04.90

(51) Int. Cl.5: **G21C 13/087, C21D 11/00**

(30) Priority: 19.06.89 US 368453

(43) Date of publication of application:
**27.12.90 Bulletin 90/52**

(84) Designated Contracting States:
**BE DE ES FR IT**

(71) Applicant: **WESTINGHOUSE ELECTRIC CORPORATION**
**Westinghouse Building Gateway Center**
**Pittsburgh Pennsylvania 15222(US)**

(72) Inventor: **Batenburg, Abram**
**609 Westchester Drive**
**Greensburgh, PA 15601(US)**
Inventor: **Miller, Roy Hartland**
**5031 Ozark Drive**
**Pittsburgh, PA 15239(US)**
Inventor: **Mathews, Harry Glenn**

**1729 Miller Avenue**
**Monroeville, PA 15146(US)**
Inventor: **Reiner, Roger Timothy**
**509 Brookside Drive**
**Murrysville, PA 15668(US)**
Inventor: **Miller, Richard Welch**
**137 Calmont Drive**
**Pittsburgh, PA 15235(US)**
Inventor: **Nickel, Donald Lloyd**
**2144 Old Dominion Drive**
**Monroeville, PA 15146(US)**
Inventor: **Romesburg, John R.**
**1067 Fieldstone Drive**
**N. Huntingdon, PA 15642(US)**

(74) Representative: **van Berlyn, Ronald Gilbert**
**23, Centre Heights**
**London, NW3 6JG(GB)**

(54) Monitoring and control of reactor vessel heat treatment.

(57) A process for controlling a vessel annealing treatment in which a heater unit assembly (2,4,6,8,10,12) composed of a plurality of electric heater units (6) is disposed in a vessel such that each heater unit (6) is in facing relation with a respective zone of the vessel, the heater unit assembly (2,4,6,8,10,12) being composed of a plurality of regions each containing a respective plurality of heater units (6), by the steps of: supplying electric current to each heater unit (6) for causing the heater unit (6) to deliver heat energy to the vessel; individually sensing the temperature of each zone of the vessel and producing a representation of each sensed temperature; deriving a representation of the temperature of each zone of the vessel by mathematically combining the sensed temperature representation of each zone with the sensed temperature representation of all other zones associated with the same region; at least periodically determining the quantity of heat to be produced by each heater unit (6) on the basis of the temperature representation derived for the zone with which that heater unit (6) is in facing relation; and adjusting the level of current supplied to each heater unit (6) on the basis of the results produced in the determining step.

FIG. 1

## MONITORING AND CONTROL OF REACTOR VESSEL HEAT TREATMENT

This invention was made under United States government contract, and the Federal Government may have rights in the subject invention.

### CROSS REFERENCE TO RELATED APPLICATIONS

The following applications disclose subject matter which is related to the present invention. They are identified by title and U.S. Serial Number. They were all originally filed on June 19, 1989.

MODULAR ANNEALING APPARATUS FOR IN SITU REACTOR VESSEL ANNEALING AND RELATED METHOD OF ASSEMBLY - Serial No. 368,454

WATER FILLED TANKS FOR TEMPORARY SHIELDING OF REACTOR VESSEL INTERNALS AND METHOD OF ASSEMBLY - Serial No. 368,133

COFFER DAM FOR TEMPORARY SHIELDING OF REACTOR VESSEL INTERNALS AND METHOD OF ASSEMBLY - Serial No. 368,635

REACTOR VESSEL ANNEALING SYSTEM - Serial No. 368,456

ANNEALING UNIT INSERTION AND REMOVAL SYSTEM -Serial No. 368,503

HEATING EQUIPMENT INSTALLATION SYSTEM AND METHOD - Serial No. 368,495

TEMPERATURE MONITORING DEVICE AND THERMOCOUPLE ASSEMBLY THEREFOR - Serial No. 368,459

ELECTRIC RESISTANCE HEATER UNIT ASSEMBLY -Serial No. 368,432

REACTOR VESSEL NOZZLE THERMAL BARRIER - Serial No. 368,738

The present invention relates to a process for controlling a reactor vessel thermal annealing treatment.

During the normal operation of a nuclear reactor, the reactor vessel, which is normally made of steel and which houses a core containing nuclear fuel, is exposed to intense radiation. Experience has shown that this radiation causes changes in the fine grain structure of the steel walls of the vessel. These structural changes make the walls brittle, a problem commonly referred to as reactor vessel embrittlement. Embrittlement reduces the flexibility of the vessel wall and increases the susceptibility of the vessel wall to fracturing, particularly if subjected to sudden stresses, such as due to operating transient events and pressurized thermal shock events.

Because of this embrittlement phenomenon, the United States Nuclear Regulatory Commission requires that a reactor vessel be removed from service when embrittlement reaches a predetermined stage, thus ending the useful life of this portion of the nuclear power plant. Replacement of such a vessel is extremely expensive because the vessel is built into and is a part of the reactor containment building, thereby making replacement economically impractical.

In order to deal with this problem, it has been proposed to subject such a vessel to annealing in place in order to restore the ductility and toughness of the metal constituting the reactor vessel.

Such an annealing treatment can be carried out using apparatus as disclosed in the above-cited U.S. application bearing Serial No. 368,456, provided with an electric resistance heater unit assembly as described in the above-cited pending U.S. application bearing Serial No. 368,432 and employing temperature monitoring arrangements as described in the above-cited pending application bearing U.S. Serial No. 368,459.

In order for such an annealing operation to be completed successfully, the reactor vessel must be heated according to a program which involves a plurality of temperature levels, variations from one temperature level to another at a controlled rate, and maintenance of the reactor vessel at each temperature level for a controlled period of time.

It is an object of the present invention to control such an annealing operation in a manner which facilitates adherence to a selected heating program.

Another object of the invention is to improve the accuracy with which the temperature in the reactor vessel is monitored, to thereby improve the control of the heating operation.

Another object of the invention is to compensate for inherent inaccuracies in individual temperature monitoring units, as well as for malfunctioning temperature monitoring devices.

Still another object of the invention is to make available to the operators controlling the annealing treatment temperature readings derived according to different techniques in order to facilitate control of the treatment, and in particular to enable the operators to deal with unexpected situations in which temperature readings derived according to one of the techniques may not be reliable.

The above and other objects are achieved, according to the present invention, by a process for controlling a vessel annealing treatment in which a heater unit assembly composed of a plurality of electric heater units is disposed in a vessel such that each heater unit is in facing relation with a respective zone of the vessel, the heater unit assembly being composed of a plurality of regions each containing a respective plurality of heater units, comprising: supplying electric current to each heater unit for causing the heater unit to deliver heat energy to the vessel; individually sensing the temperature of each zone of the vessel and producing a representation of each sensed temperature; deriving a representation of the temperature of each zone of the vessel by mathematically combining the sensed temperature representation of each zone with the sensed temperature representation of all other zones associated with the same region; at least periodically determining the quantity of heat to be produced by each heater unit on the basis of the temperature representation derived for the zone with which that heater unit is in facing relation; and adjusting the level of current supplied to each heater unit on the basis of the results produced in the determining step.

Figure 1 is an elevational view of a heater unit assembly whose operation can be monitored and controlled according to the present invention.

Figure 2 is a programming flow diagram illustrating the sequence of operations constituting the process according to the present invention.

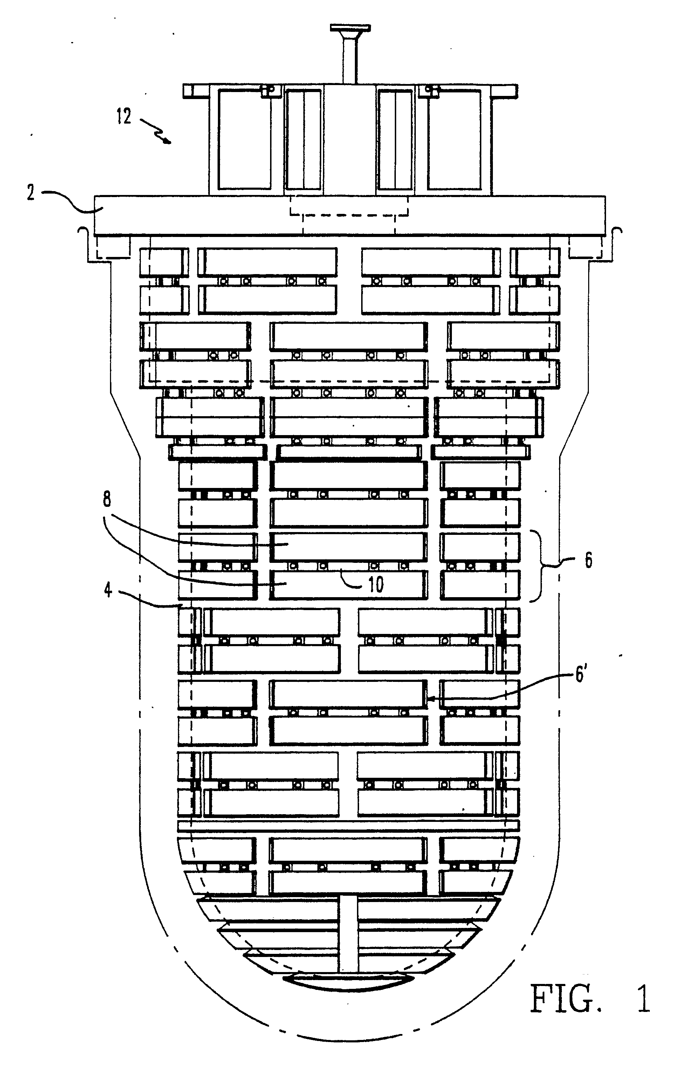

Figure 1 illustrates an exemplary embodiment of a heater unit assembly which can be employed to perform a reactor vessel annealing treatment. The assembly includes a top plate 2 carrying a supporting shell 4 which is open at the top and provided with a closed, dome-shaped bottom. Shell 4 carries a plurality of resistance heater units 6, each heater unit being constituted by two housings 8 carrying heating resistances and, in a region 10 between housings 8, a thermocouple assembly for monitoring the temperature at the center of the region of the vessel wall which faces the associated heater unit 6. Shell 4 is configured to conform to the shape of the interior of a reactor vessel and heater units 6 are distributed around the outer surface of shell 4 in a manner to effect a uniform heating of the reactor vessel wall.

To perform an annealing treatment, the heater unit assembly is lowered into the reactor vessel so that top plate 2 rests upon a ledge, or flange, provided at the top of the reactor vessel.

Heating current is supplied to each heater unit via a respective set of power conductors (not shown) extending through a support structure 12 mounted on plate 2, through an opening at the center of top plate 2, and through the interior of shell 4. Thermocouple connections extend over the same path.

The performance of an annealing treatment with the use of the assembly shown in Figure 1 requires that the reactor vessel be brought to specified temperatures for specified periods of time and that changes in temperature be effected at a controlled rate. Such a heating operation is subjected to a wide variety of variables, many of which are unpredictable, and accurate temperature control is complicated by the fact that a significant time delay exists between a change in the heat output from the heater units and a corresponding change in the vessel wall temperature. Therefore, temperature readings must be taken from thermocouple assemblies at regular intervals and the validity of each temperature reading should be tested in order to enhance the reliability of the annealing treatment.

An annealing treatment according to the present invention is performed under constant supervision by operators, assisted by a computer system which continuously monitors the heating evolution and presents the status of that evolution to the operators via color CRT displays. A main operator, based on the information provided, makes all of the final decisions on the control of the heating evolution. These decisions result in the setting of the power level at which each individual heater unit is to operate. Power level commands are used to produce individual power level set points supplied via analog controllers which regulate the power generated in each resistance heater unit. The individual heater assemblies 6 are controlled on the basis of these set points and signals indicating deviations in temperature from the desired values.

The temperature in each zone of the vessel must be maintained at a value close to its associated set point to insure that the desired annealing result is produced without generating unacceptably large thermal stresses. In order to achieve this result, the temperature reading of each thermocouple assembly must be monitored on a regular basis at frequent intervals. In the type of annealing operation contemplated, a 2-minute interval is suitable.

According to one significant feature of the present invention, the readings produced by each thermocouple assembly are validated by comparing each reading with fixed upper and lower limits. In addition, the change in the temperature reading produced by each thermocouple assembly during each measuring interval is monitored and compared with a selected value which represents the maximum temperature change which can be expected during an interval, it being known that the temperature of any zone of a

4

reactor vessel can vary to only a limited extent during a short interval.

If it is found that the temperature reading of a thermocouple assembly is not within the fixed limits or has varied by more than the predetermined amount during an interval, a conclusion is reached that the thermocouple assembly has malfunctioned and the readings of that assembly are no longer employed to control the process. Under control of an operator, the reading of an adjacent thermocouple assembly can be substituted for that of the assembly which has been determined to be malfunctioning. This is of great value because it is very costly to abort an annealing treatment, remove the heater unit assembly, replace the faulty thermocouple assembly, and start the annealing treatment from the beginning.

According to the invention, an area of the vessel wall which is directly opposite one heater unit 6 is defined as a zone and all of the resulting zones are divided into a plurality of regions, each region containing a selected number of zones. The number of regions and the number of zones in each region are selected on the basis of tests and calculations which indicate that a certain relation will exist among the temperatures in the zones forming a region. For example, an exemplary heater unit 6′, which defines one zone, may be in a circular region extending about the axis of the heater unit assembly or may be part of a block-shaped region composed of heater units to both sides of heater unit 6′ and/or above and/or below heater unit 6′.

An indication of the vessel wall temperature in each zone is preferably derived in several different ways, with the result of each derivation being available to the operator. The readings based on any one technique will be displayed at any given time, and the operator has the capability of changing the display to readings produced according to a different technique.

One measuring value derivation technique employs an approach in which the reading for each zone is derived on the basis of a calculation which takes into account the readings associated with all of the zones in the corresponding region. For deriving a reading for each zone, each reading in the associated region is multiplied by a weighing factor, or coefficient, which has been determined experimentally in accordance with techniques involving the use of least square curve fits. A separate calculation will be made for each zone in a region. This approach reduces the adverse influences of individual thermocouple assembly inaccuracies.

A second reading is derived directly from each thermocouple assembly, and may be based on a calculation performed on the readings produced by a plurality of individual thermocouples in the assembly, as disclosed in the co-pending U.S. application having Serial No. 368,459.

If the readings produced by a given thermocouple assembly indicate that assembly is malfunctioning, those readings can be replaced, in the control process, by readings derived from an adjacent heater unit which is expected to be associated with a vessel wall zone having a temperature closely approximating that of the zone associated with the faulty thermocouple assembly. Preferably, the individual supervising the process intervenes to make such replacements.

In addition, the temperature distribution throughout the vessel is analyzed by comparing thermocouple assembly readings according to a simplified stress analysis approach.

The ultimate control of the annealing process is in the hands of the operators. However, because of the relative complexity of the process, given the number of variables involved and unknowns in the thermal response of the reactor vessel, an on-line digital computer is used to provide the operators with the information necessary to perform the control operations. The computer is programmed to calculate the desired temperature for each heater unit zone as the annealing treatment proceeds, taking into account the temperature-time profiles of neighboring heater unit zones. After comparison of measured vessel temperatures, the computer displays the recommended power levels for each heater unit. The operator has the option of accepting the recommendations provided by the computer system, possibly by inputting a single key stroke, or of manually overriding any recommendations provided by the computer. All pertinent data for each measuring cycle is stored for future analysis and verification.

Preferably, a back-up computer is provided to take over operation if the main computer should breakdown. The back-up computer would be provided with the same software as the main computer, and with full monitoring capability, including a color CRT display. The back-up computer could be connected to operate continuously in parallel with the main computer, without outputting power level information. Therefore, if the main computer should fail, the issuance of a simple command to the back-up computer would place it fully on-line to take over all operations of the main computer, including the outputting of power level recommendations. The only additional requirement would be the connection of the analog heater controllers to the back-up computer.

Complete information about the system instrumentation and interconnecting wiring can be contained in each computer to provide the operator with essentially instantaneous access to detailed information for trouble-shooting the instrumentation system. Furthermore, this information can be rearranged via a known

5

sorting algorithm to highlight any specific subject matter.

The vessel annealing computer system is supported by a data base maintained in the main computer memory to provide fast access to all data base information. Any item in the data base can be changed as needed and a full record of all such changes is maintained by the programming.

Preferably, programming is provided to interface both the main computer and the back-up computer with a third computer intended for engineering supervision of the annealing process. The third computer maintains, in a conventional manner, long-term records of data for review and analysis, as well as programs, such as plotting control, spreadsheet calculations, etc., to assist this supervision. For security reasons, the system is preferably constructed so that information flow is in a direction only toward the third computer. The transfer of all pertinent data preferably takes place at the intervals employed for vessel temperature monitoring. Programming is preferably provided to facilitate phased implementation and testing of the complete programming. Since reactor vessel annealing is a new procedure, the computer system is preferably provided with real-time simulating capability to aid in the training of operators. Accordingly, the programming is established to enable the interfaces which receive actual temperature measurement signals and produce heater control signals to be replaced by interfaces which provide simulations of these signals. The programming also provides for changeover between actual vessel operation and simulator operation, this involving a few minor changes in the data base before it is initialized and loaded.

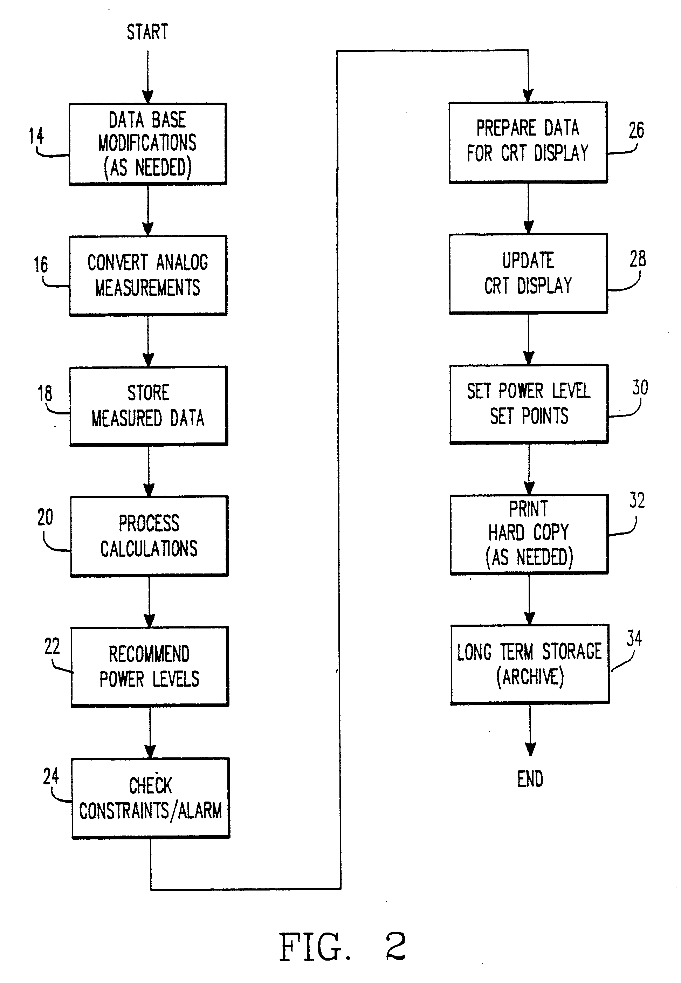

Figure 2 presents a flow diagram of the operation of such a computer system, this diagram illustrating the operation performed during each monitoring cycle, or interval.

As represented by function block 14, at the start of each cycle, any needed data base modifications are stored, after which, as shown in function block 16, the arriving temperature measurement signals, which are generated in analog form, are converted to digital form, and are stored in this form, as indicated by function block 18. The stored data is subject to process calculations, as indicated by function block 20, which generate an output, function block 22, advising the operator of recommended power levels for all heater units.

Then, as represented by function block 24, the recommended power levels are checked with respect to predetermined level constraints relating, for example, to maximum permissible power levels and power level changes during one interval, and an alarm is issued if any constraint has been exceeded.

Subsequently, as represented by function block 26, the calculated data is prepared for display, after which the CRT display is updated, as represented by function block 28.

Thereafter, desired power level set points are reset, as represented by function block 30, and, as needed, hard copies of the derived data are printed, as shown by function block 32. Finally, referring to function block 34, the derived data values are placed in long-term storage, and at the end of the next interval, the entire process is repeated.

Both the main computer and the back-up computer contain a software system which can operate in a verification mode prior to initiation of an annealing operation. This mode of operation provides a systematized approach to verification of the computer software by a "static" simulation of calculations performed by selected software modules at a specific point in time. A software module is defined as a program unit which may also execute additional related subprograms and subroutines. The verification also provides a simulation of the calculations performed by selected software modules during a specified time variant period. The verification mode also provides a systemized approach whereby the operator can ascertain the operational readiness of computer mainframe auxiliary devices prior to usage of such devices in the monitoring and control of the process. The types of on-line devices for which operational readiness is determined includes (but is not limited to) the following: floppy disks, CRT monitors, tape cartridges, signal processors, printers, plotters, clocks, and alarms and constraints.

The verification system enables the maintenance of software integrity as influenced by (1) transfer of the computer system from one location to another, (2) installation of a new or updated computer operating system, and (3) failure of the on-line computer system during the annealing process. In the latter case, after switchover to the back-up computer, the failed computer system can be investigated by the verification system. The verification system also facilitates the determination of the operational status of the auxiliary monitoring and control equipment at the following times:

(1) after transfer of the computer system between locations,
(2) prior to initiation of the annealing process, and
(3) after failure of the on-line control computer.

While the description above refers to particular embodiments of the present invention, it will be understood that many modifications may be made without departing from the spirit thereof. The accompanying claims are intended to cover such modifications as would fall within the true scope and spirit of the present invention.

The presently disclosed embodiments are therefore to be considered in all respects as illustrative and not restrictive, the scope of the invention being indicated by the appended claims, rather than the foregoing description, and all changes which come within the meaning and range of equivalency of the claims are therefore intended to be embraced therein.

| IDENTIFICATION OF REFERENCE NUMERALS USED IN THE DRAWINGS | | |
|---|---|---|
| LEGEND | REF. NO. | FIGURE |
| DATA BASE MODIFICATIONS (AS NEEDED) | 14 | 2 |
| CONVERT ANALOG MEASUREMENTS | 16 | 2 |
| STORE MEASURED DATA | 18 | 2 |
| PROCESS CALCULATIONS | 20 | 2 |
| RECOMMEND POWER LEVELS | 22 | 2 |
| CHECK CONSTRAINTS/ALARM | 24 | 2 |
| PREPARE DATA FOR CRT DISPLAY | 26 | 2 |
| UPDATE CRT DISPLAY | 28 | 2 |
| SET POWER LEVEL SET POINTS | 30 | 2 |
| PRINT HARD COPY (AS NEEDED) | 32 | 2 |
| LONG TERM STORAGE (ARCHIVE) | 34 | 2 |

## Claims

1. A process for controlling a vessel annealing treatment in which a heater unit assembly (2,4,6,8,10,12) composed of a plurality of electric heater units (6) is disposed in a vessel such that each heater unit (6) is in facing relation with a respective zone of the vessel, the heater unit assembly (2,4,6,8,10,12) being composed of a plurality of regions each containing a respective plurality of heater units (6), characterized by:
supplying electric current to each heater unit (6) for causing the heater unit (6) to deliver heat energy to the vessel;
individually sensing (16) the temperature of each zone of the vessel and producing a representation of each sensed temperature;
deriving (20) a representation of the temperature of each zone of the vessel by mathematically combining the sensed temperature representation of each zone with the sensed temperature representation of all other zones associated with the same region;
at least periodically determining (22) the quantity of heat to be produced by each heater unit (6) on the basis of the temperature representation derived for the zone with which that heater unit (6) is in facing relation; and
adjusting the level of current supplied to each heater unit (6) on the basis of the results produced in said determining step.

2. A process as defined in claim 1 further characterized in that said step of determining comprises:
producing an indication of the desired temperature of each zone (14); and
comparing (20) the indication for each zone with the derived temperature representation for that zone.

3. A process as defined in claim 1 wherein said steps of deriving, determining and adjusting are carried out repetitively at regular intervals.

4. A process as defined in claim 1 wherein the intervals are of the order of 2 minutes apart.

5. A process as defined in claim 1 wherein said step of deriving a representation (20) is characterized by, for each zone, modifying the sensed temperature representation of each other zone by a respective weighing factor determined in a manner to establish a least squares curve fit for the derived representation with respect to the sensed temperature representations of all other zones associated with the same region.

6. A process as defined in claim 1 further comprising: sensing the production of an erroneous temperature representation; and substituting, in said step of deriving, a sensed temperature representation of a zone having a temperature behavior similar to that of the zone for which the erroneous temperature representation was produced.

7. A process as defined in claim 1 further comprising periodically determining the quantity of heat to be produced by each heater unit (6) on the basis of the representation of the sensed temperature of the zone in facing relation with the respective heater unit.

8

FIG. 1

START

14 ── DATA BASE
MODIFICATIONS
(AS NEEDED)

16 ── CONVERT ANALOG
MEASUREMENTS

18 ── STORE
MEASURED DATA

20 ── PROCESS
CALCULATIONS

22 ── RECOMMEND
POWER LEVELS

24 ── CHECK
CONSTRAINTS/ALARM

PREPARE DATA
FOR CRT DISPLAY ── 26

UPDATE
CRT DISPLAY ── 28

SET POWER LEVEL
SET POINTS ── 30

PRINT
HARD COPY
(AS NEEDED) ── 32

LONG TERM STORAGE
(ARCHIVE) ── 34

END

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN, vol. 10, no. 90 (C-337)[2147], 8th April 1986; & JP-A-60 221 523 (KAWAJIYUU KOUJI K.K.) 06-11-1985 <br> * Abstract * | 1-2,7 | G 21 C 13/087 <br> C 21 D 11/00 |
| A | KERNTECHNIK, vol. 51, no. 4, December 1987, pages 256-258, Munich, DE; C. LEITZ: "Reactor pressure vessel aging and countermeasures" <br> * Page 258, left-hand column, paragraph 1 - right-hand column, paragaph 1; figure 4 * | 1,7 | |
| A | GB-A-1 439 456 (BRITISH IRON & STEEL R.A.) <br> * Page 1, lines 16-78; page 2, lines 65-72; page 3, lines 28-49; claims 2,5-6 * | 1-3,7 | |

TECHNICAL FIELDS
SEARCHED (Int. Cl.5)

G 21 C 13/00
C 21 D 11/00
C 21 D 9/00

The present search report has been drawn up for all claims

| Place of search | Date of completion of the search | Examiner |
|---|---|---|
| THE HAGUE | 05-09-1990 | CAPOSTAGNO E. |

EPO FORM 1503 03.82 (P0401)